# EUROPEAN PATENT SPECIFICATION

(11) **EP 3 444 176 B1**
(45) Date of publication and mention of the grant of the patent: **26.02.2020**
(21) Application number: 17907471.1
(22) Date of filing: 22.06.2017
(51) Int. Cl.: B62M 6/40, B62M 6/90, B62K 11/04, B62K 19/30, B62M 6/55

(54) **BICYCLE FRAME TUBE HAVING BUILT-IN MOTOR, BICYCLE FRAME AND ELECTRIC BICYCLE**
FAHRRADRAHMENROHR MIT EINGEBAUTEM MOTOR, FAHRRADRAHMEN UND ELEKTROFAHRRAD
TUBE DE CADRE DE VÉLO AYANT UN MOTEUR INTÉGRÉ, CADRE DE VÉLO ET VÉLO ÉLECTRIQUE

(30) Priority: 28.04.2017 CN 201710294723
(43) Date of publication of application: 20.02.2019
(73) Proprietor: Guangzhou Zhanhui Electronics Co., Ltd., Guangzhou, Guangdong 511453 (CN)
(72) Inventor: TUNG, Chiu Ki, Guangzhou Guangdong 511453 (CN)
(74) Representative: Sun, Yiming
(86) International application number: PCT/CN2017/000393
(87) International publication number: WO 2018/195677

(56) References cited:
- EP-A2- 2 423 096
- EP-A2- 3 109 146
- CN-A- 101 730 642
- CN-A- 106 379 472
- CN-U- 202 358 266
- CN-U- 203 714 120
- CN-U- 203 714 120
- CN-U- 205 801 401
- CN-U- 206 766 247
- JP-A- 2007 230 410
- KR-A- 20160 059 329

## Description

### FIELD OF THE INVENTION

This invention relates to an electric bicycle, in particular to an improvement of an electric bicycle frame tube with a built-in middle-motor and its frame structure.

### BACKGROUND

Bicycles with auxiliary electric motors are usually equipped with front-wheel motors, rear-wheel motors or center-mounted motors (also referred to as "middle-motor" hereafter), which are collectively referred to as "electric bicycles" or "eBicycles" or "eBikes".

For front and rear wheel motors, they are hub motors and are manufactured to form part of the front and rear wheels of a bicycle respectively. For the middle-motor, it is part of the central axle drive system of an electric bicycle, the electric bicycle is driven by the use of a power source to drive the motor, which is generally mounted in the lower middle portion of an electric bicycle.

Currently, the most practical way to mount a middle-motor to a bicycle is to make use of the bottom bracket of the bicycle, adopting the steps as follows: first insert the gearbox axle into the bottom bracket, then use additional bracket(s) to keep the gearbox axle and axle of the middle-motor in parallel, ensuring the normal coordination of the middle-motor and the gearbox. Then use connecting bridge and clip(s) to stabilize the middle-motor on the seat tube and/or the lower fork to prevent it from swinging back and forth. Finally, use the nut of the bottom bracket to secure the gearbox to the bottom bracket.

The above-mentioned installation method is not only time-consuming and laborious, but also requires additional spare parts. In addition, given the volume and width of a middle-motor, after its installation through the bottom bracket, its total width would exceed the width of the bottom bracket. Hence, the appearance difference between an electric bicycles and an ordinary bicycles would be large, and the streamlined beauty of the bicycle would be compromised.

In pursuit of the streamlined appearance of electric bicycles, electric bicycle manufacturers would use splice boxes or splice sheets to weld the middle-motor, the down tube and the seat tube together, using the relatively expensive method of hot-forging. Furthermore, since the design of the middle-motor and the frame tube are not synchronized, using additional components (such as splice boxes/splicing sheets) and hot-forging welding become the indispensable process of the assembly. Moreover, the above-mentioned assembly process also involves much resources, such as additional parts, time and labor. In addition, connecting the middle-motor with the down tube and seat tube using hot-forging welding still cannot fully satisfy the streamlined beauty required of electric bicycles.

In view of the above-mentioned deficiencies, the present invention suggests installing the middle-motor in the pre-assembled bicycle frame. Relative to the prior art, the present invention could solve the complex assembly procedures in a simpler, more efficient and economical way; and the combination of the frame and the different parts in such a way could achieve the best visual effect of electric bicycles. Document EP2423096, which shows all the features of the preamble of claim 1, discloses such a known prior art.

### SUMMARY OF THE INVENTION

Against the fact that the prior art of installing middle-motor is time consuming, laborious, uneconomical, and lacks the sense of beauty, this invention presents a frame tube with a built-in middle-motor, which also relates to the frame structure and its electric bicycle.

In order to achieve the above objectives, the present invention provides a pre-assembled bicycle frame tube (also referred to as "frame tube" or "down tube" hereafter) with a built-in middle-motor, which can be used as a down tube or a seat tube of a bicycle frame, including: a tube body, a middle-motor and a gearbox, wherein the said middle-motor and the said gearbox are integrated and rotate coordinately. The lower end of the tube body is provided with a built-in bottom bracket and a motor accommodating cavity that matches the outer contour of the said middle-motor. The said middle-motor is detachably placed in the said motor accommodating cavity; and the said middle-motor and the gearbox are locked into the said frame tube after inserting the gearbox axle of the said gearbox through the said built-in bottom bracket.

For the said frame tube with built-in middle-motor, the said tube body is a flat tube with a plurality of wall surfaces; and the said middle-motor and the said gearbox are locked into the said frame tube with an axle nut that is screwed with the other end of the said built-in bottom bracket after the gearbox axle of the said gearbox is inserted through the said built-in bottom bracket.

For the said frame tube with built-in middle-motor, the axle of the said middle-motor is arranged in parallel with the gearbox axle of the said gearbox. The said motor accommodating cavity is an opening cut on one side of the tube body, the inner wall of the motor accommodating cavity has a plurality of grooves, and the outer wall of the said middle-motor is provided with convex profiles that match with the inner wall grooves of the said motor accommodating cavity.

For the said frame tube with built-in middle-motor, the said tube body is further provided with a battery compartment, and the battery could be detachably placed in the said battery compartment.

For the said frame tube with built-in middle-motor, the said battery compartment is designed as a concave notch on the upper side of the tube body. With the support of the said tube body, the battery could be detachably placed on the said notch.

A pre-assembled bicycle frame with a built-in middle-motor, comprising: a head tube, a down tube, a seat tube, a lower rear fork and a upper rear fork which are connected together, and a middle-motor together with a gearbox to be mounted into the bicycle frame. The said middle-motor and the said gearbox are integrated and rotate coordinately. The lower end of the said down tube or the said seat tube is provided with a built-in bottom bracket and a motor accommodating cavity that matches the outer contour of the said middle-motor, the said middle-motor is detachably disposed in the said motor accommodating cavity, the said middle-motor and the said gearbox are locked into the said down tube or the said seat tube after the gearbox axle of the said gearbox is inserted through the said built-in bottom bracket.

For the said bicycle frame with built-in middle-motor, the said middle-motor and the said gearbox are locked into the said down tube or the said seat tube with an axle nut that is screwed with the other end of the said built-in bottom bracket after the gearbox axle of the said gearbox is inserted through the said built-in bottom bracket.

For the said bicycle frame with built-in middle-motor, the axle of the said middle-motor and the gearbox axle of the said gearbox are parallel; the said motor accommodating cavity is an opening cut on one side of the tube body; and its inner wall is provided with a plurality of grooves, and the outer wall of the said middle-motor is provided with convex profiles corresponding to the inner wall grooves of the said motor accommodating cavity.

For the said bicycle frame with built-in middle-motor, the said down tube or the said seat tube is a flat tube having a plurality of wall surfaces.

For the said bicycle frame with built-in middle-motor, the outer width of the down tube or the seat tube is less than or equal to the length of the said built-in bottom bracket; and the width of the said middle-motor does not exceed the width of the down tube or the seat tube.

For the said bicycle frame with built-in middle-motor, the said down tube or the said seat tube has the same height at both ends, or that the height of the lower end portion provided with the motor accommodating cavity is set to be greater than the height of the upper end portion thereof.

For the said bicycle frame with built-in middle-motor, the said down tube or the said seat tube is further provided with a battery compartment; and the battery is detachably disposed in the said battery compartment.

An electric bicycle comprising the said bicycle frame with a built-in middle-motor, wherein the said gearbox axle of the said gearbox is inserted through the said built-in bottom bracket, and the two ends thereof are connected with a left crank, a right crank respectively, and the sprocket rotates cooperating with the said gearbox via the said gearbox axle.

### BRIEF DESCRIPTION OF DRAWINGS

Fig. 1 is an exploded perspective view of the bicycle frame tube with a built-in middle-motor and other related components of the present invention;
Fig. 2 is an exploded perspective view of the bicycle frame with a built-in middle-motor and other related components of the present invention;
Fig. 3 is a left side view of the overall assembly of the bicycle frame with a built-in middle-motor of the present invention;
Fig. 4 is a right side view of the overall assembly of the bicycle frame with a built-in middle-motor of the present invention;
Fig. 5 is a schematic view of an electric bicycle using the bicycle frame of the present invention.

**Table of reference numbers used in the drawings**

| | | |
|---|---|---|
| 1 | Head tube | |
| 2 | Pre-assembled frame tube (also referred to as "frame tube" or "down tube") | |
| | 21 | Tube body |
| | 22 | Motor accommodating cavity |
| | 23 | Built-in bottom bracket |
| | 24 | Battery compartment |
| 3 | Built-in Middle-motor (also referred to as "middle-motor") | |
| 4 | | Gearbox |
| | 41 | Gearbox axle |
| | 42 | Axis nut |
| 5 | Sprocket | |
| 6 | Battery | |
| 7 | Right crank | |
| 8 | Left crank | |
| 9 | Lower rear fork | |
| 10 | Upper rear fork | |
| 11 | Seat tube | |
| 12 | Upper tube | |

### DETAILED DESCRIPTION OF THE INVENTION

In order to clearly spell out the objectives, technical solutions and beneficial effects of the present invention, the present invention will be further described in detail below with reference to the accompanying drawings and embodiments. It is understood that the specific embodiments described herein are merely for the illustration of the new technical concepts, ideas, principles and characteristics of the present invention and are not intended to limit the present invention.

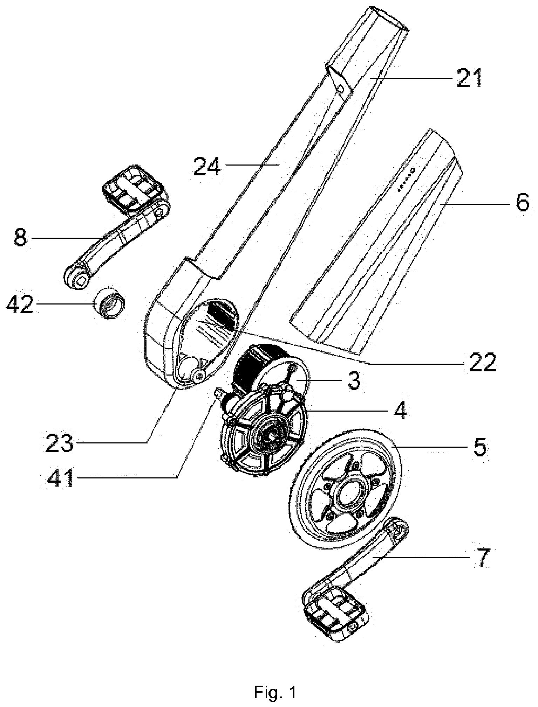

As shown in Fig. 1, the bicycle frame tube with built-in middle-motor of the present invention comprises a tube body 21, the lower end of the tube body 21 is provided with a motor accommodating cavity 22 and a built-in bottom bracket 23, and the middle-motor 3 is placed in the motor accommodating cavity 22. To facilitate inserting and removing the middle-motor 3 from the motor accommodating cavity 22, the motor accommodating cavity 22 is preferably arranged to be cut open on one side of the tube body 21, with a small hole drilled on the wall opposite to the said opening. There is a plurality of grooves at the inner walls of the motor accommodating cavity 22, and the outer wall of the middle-motor 3 is provided with convex profiles that match with the inner wall grooves of the motor accommodating cavity 22, and the middle-motor 3 can also be fixed in the motor accommodating cavity 22 by other conventional fixing methods of the prior art. The gearbox 4 and the middle-motor 3 are integrated and rotate coordinately, and the middle-motor 3 and the gearbox 4 could be locked into the bicycle frame tube after inserting the gearbox axle 41 of the gearbox 4 through the built-in bottom bracket 23. Furthermore, the tube body 21 could be provided with a battery compartment 24 for housing the battery 6, and the battery 6 could be detachably placed in the said battery compartment 24.

The bicycle frame tube with built-in middle-motor 3 of the present invention forms part of the bicycle frame, preferably as a down tube of the frame, or can be set as a seat tube of the frame as needed. The following is a specific embodiment of taking the frame tube with the built-in middle-motor 3 as the down tube of the bicycle frame.

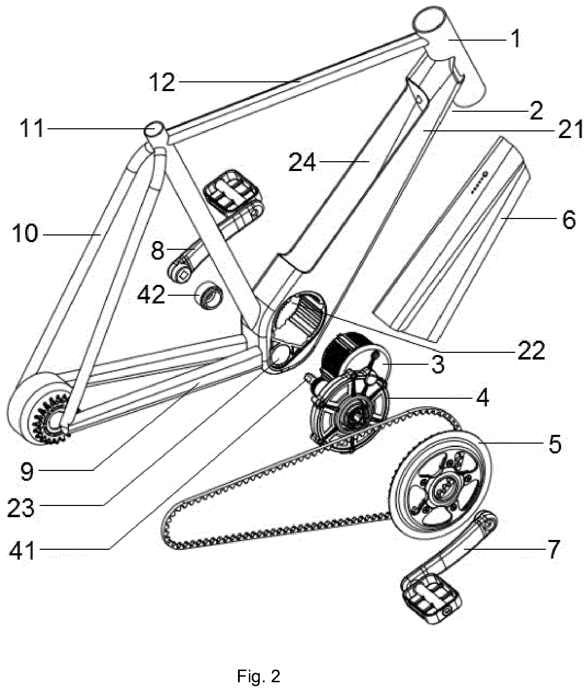

As shown in Fig. 2, the bicycle frame usually includes a head tube 1, a down tube 2, a seat tube 11, an upper rear fork 10, and a lower rear fork 9, which are connected to each other, and sometimes includes an upper tube 12.

As shown in Fig. 2, the frame tube with built-in middle-motor 3 is set as the down tube 2 of the bicycle frame, the lower end of which is connected to the lower ends of the lower rear fork 9 and the seat tube 11, and the other end is connected to the head tube 1 of the electric bicycle. The middle-motor 3 and the gearbox 4 of the electric bicycle are integrated and rotate coordinately, and when the middle-motor 3 is in operation, the sprocket 5 is rotated by the gearbox 4 to drive the bicycle; the gearbox 4 includes the transmission gear and the clutch device. Since matching transmission of the middle-motor 3 and gearbox 4 is of prior art, the specific structure thereof is not described in detail. An integrated design of the middle-motor 3 and the gearbox 4 is employed to ensure smooth power transmission, wherein the middle-motor 3 is inserted from the large opening side of the motor accommodating cavity 22, and then housed completely and firmly into and integrated with the tube body 21; the middle-motor 3 and the gearbox 4 are locked into the tube body 21 with an axle nut 42 that is screwed with the other end of the built-in bottom bracket 23 after the gearbox axle 41 of the gearbox 4 is inserted through the built-in bottom bracket 23. Should maintenance of the middle-motor 3 and/or the gearbox 4 be required, simply loosen the axle nut 42 and then remove the middle-motor 3 together with the gearbox 4.

The frame tube of the present invention can be manufactured using a variety of different materials, such as aluminum, stainless steel, other metal or alloy materials, and can also be realized with different series of plastic profiles, such as polymer or fiber reinforced plastic, and the process of manufacturing the frame tube could be carried out by conventional methods such as extrusion, hydraulic, forging or pultrusion.

Preferably, the frame tube for inserting and accommodating the middle-motor 3 could be a flat tube having a plurality of wall surfaces, for example a four-sided flat tube, and both ends of the frame tube may have the same height. Alternatively, it could be designed to the effect that the height of the lower end portion of the frame tube for accommodating the middle-motor 3 is greater than the height of the other end portion thereof connected to the head tube 1.

In order to mount the middle-motor 3 in the motor accommodating cavity 22 and not protruding from the frame tube, the motor accommodating cavity 22 needs to be coordinated with the shape and size of the middle-motor 3.

Preferably, the axle of the middle-motor 3 is parallel to the gearbox axle 41, and after inserting into the built-in bottom bracket 23, the two ends of the gearbox axle 41 are respectively connected with the left crank 8 and the right crank 7, the sprocket 5 rotates by coupling with the gearbox 4 via the gearbox axle 41, and the right crank 7 locks tight to the sprocket 5. When the middle-motor 3 is in operation, the gearbox 4 transmits the power of the middle-motor 3 to the sprocket 5 to drive the sprocket 5 to rotate, thereby driving the electric bicycle. Though the gear box 4 is disposed outside the frame tube 2, given that the exposed side of the gearbox 4 is shielded by the sprocket cover, the overall beauty appearance of the eBike is not affected.

Preferably, the frame tube is further provided with a battery compartment 24, and the battery 6 required for driving the electric bicycle can be installed and fixed in the battery compartment 24. The battery compartment 24 can be configured as a single-sided opening to facilitate insertion or removal of the battery 6. Alternatively, the battery compartment 24 of the frame tube could be a recess section of the upper side of the tube body 21 that matches the shape of the battery. The tube body 21 supports placement of the battery 6 and fixed on the notch, and the battery 6 is integrated with the tube body 21.

In order to achieve the streamlined beauty of the bicycle frame, the outer width of the frame tube is preferably less than or equal to the length of the built-in bottom bracket 23. As the middle-motor 3 needs to be housed inside the bicycle frame tube 2, the width of the middle-motor 3 does not exceed the width of the frame tube 2 accordingly.

When the frame tube is designed as the seat tube 11 of the bicycle frame, its lower end is connected to the lower ends of the lower rear fork 9 and the down tube 2, and the other end is connected to the upper rear fork 10. The embodiment of this case is easily understood and is not separately illustrated.

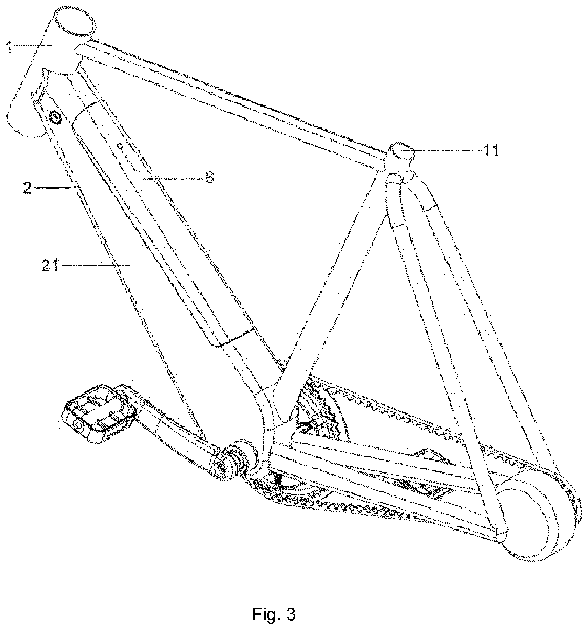

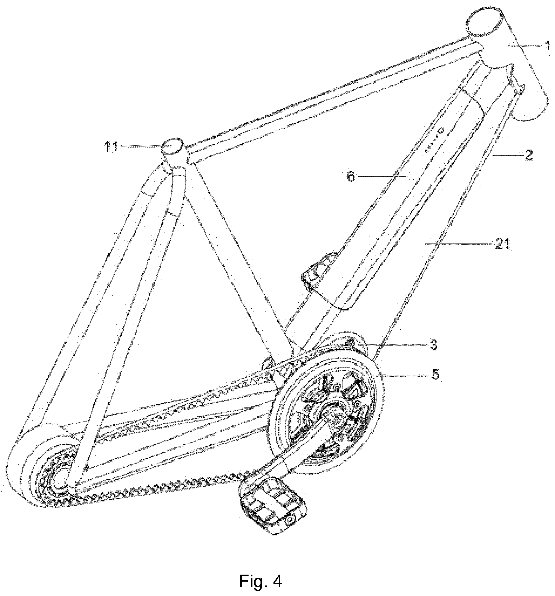

Fig. 3 and Fig. 4 show the left and right side views of the electric bicycle frame respectively after the middle-motor 3 and the gearbox 4 are mounted.

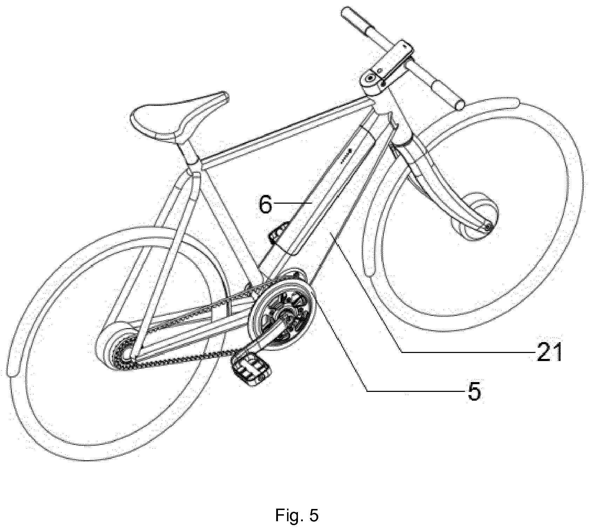

Fig. 5 shows an electric bicycle using the frame tube of the present invention. After the gearbox axle 41 is inserted into the built-in bottom bracket 23, the middle-motor 3 and the gearbox 4 are mounted and fixed into the tube body 21, and the middle-motor 3 is entirely hidden in the tube body 21, the gearbox 4 is exposed on one side of the tube body 21 and is shielded by the sprocket cover. As the two ends of the gearbox axle 41 are respectively connected to the left crank 8 and the right crank 7, the bicycle could be driven by human peddling, the sprocket 5 rotates by coupling with the gearbox 4 via the gearbox axle 41. Please refer to Fig. 2 for the components that are occluded or unlabeled in Fig. 5.

Compared with the existing electric bicycle frame tube and frame, the present invention provides a motor accommodating cavity and a built-in bottom bracket on the frame tube, making it possible to conceal the middle-motor inside the frame tube completely, which not only solves the drawbacks of the traditional method of installing middle-motor, inter alia, time-consuming, laborious and uneconomical, but also makes the appearance of the electric bicycle closer to the ordinary bicycle and presents the streamlined visual effect of electric bicycles as opposed to the traditional eBikes.

The above description is only the preferred embodiments of the present invention, and is not intended to limit the present invention. For those who are skilled in this art, the present invention is subject to various changes and modifications.

## Claims

1. A pre-assembled bicycle frame tube with a built-in middle-motor that could be used as a down tube (2) or a seat tube (11) of a bicycle frame, including: a tube body (21), a middle-motor (3) and a gearbox (4). The said middle-motor (3) and the said gearbox (4) are integrated and rotate coordinately. The bicycle frame tube is **characterized by**:
The lower end of the said tube body (21) is provided with a built-in bottom bracket (23) and a motor accommodating cavity (22) that matches the outer contour of the said middle-motor (3). The said middle-motor (3) is detachably placed in the said motor accommodating cavity; and the said middle-motor (3) and the said gearbox (4) are locked into the said frame tube after inserting a gearbox axle (41) of the said gearbox (4) through the built-in bottom bracket (23).

2. The bicycle frame tube according to claim 1, wherein the said tube body (21) is a flat tube with a plurality of wall surfaces; and the said middle-motor (3) and the said gearbox (4) are locked into the said tube body (21) with an axle nut (42) that is screwed with the other end of the said built-in bottom bracket (23) after the gearbox axle (41) of the said gearbox (4) is inserted through the said built-in bottom bracket (23).

3. The bicycle frame tube according to claim 1, wherein the axle of the said middle-motor (3) is arranged in parallel with the gearbox axle (41) of the said gearbox (4). The said motor accommodating cavity (22) is an opening cut on one side of the tube body (21), the inner wall of the said motor accommodating cavity (22) has a plurality of grooves, and the outer wall of the said middle-motor (3) is provided with convex profiles that match with the inner wall grooves of the said motor accommodating cavity (22).

4. The bicycle frame tube according to any claim of 1 to 3, wherein the tube body (21) is further provided with a battery compartment (24), and the battery (6) could be detachably placed in the said battery compartment (24).

5. The bicycle frame tube according to claim 4, wherein the said battery compartment (24) is designed as a concave notch on the upper side of the said tube body (21). With the support of the said tube body (21), the battery (6) could be detachably placed on the said notch.

6. A pre-assembled bicycle frame with a built-in middle-motor, comprising: a head tube (1), a down tube (2) and a seat tube (11) according to claim 1, a lower rear fork (9) and a upper rear fork (10) which are connected together, and a middle-motor (3) together with a gearbox (4) to be mounted into the bicycle frame.

7. The bicycle frame according to claim 6, wherein the said middle-motor (3) and the said gearbox (4) are locked into the said down tube (2) or the said seat tube (11) with an axle nut (42) that is screwed with the other end of the said built-in bottom bracket (23) after the gearbox axle (41) of the said gearbox (4) is inserted through the said built-in bottom bracket (23).

8. The bicycle frame according to claim 6, wherein the axle of the said middle-motor (3) and the gearbox axle (41) of the said gearbox (4) are parallel; the said motor accommodating cavity (22) is an opening cut on one side of the tube body (21), and the inner wall of the motor accommodating cavity (22) is provided with a plurality of grooves, and the outer wall of the said middle-motor (3) is provided with convex profiles corresponding to the inner wall grooves of the said motor accommodating cavity (22).

9. The bicycle frame according to claim 8, wherein the said down tube (2) or the said seat tube (11) is a flat tube having a plurality of wall surfaces.

10. The bicycle frame according to claim 9, wherein the outer width of the said down tube (2) or the said seat tube (11) is less than or equal to the length of the said built-in bottom bracket (23); and the width of the said middle-motor (3) does not exceed the width of the said down tube (2) or the said seat tube (11).

11. The bicycle frame according to claim 9, wherein the said down tube (2) or the said seat tube (11) has the same height at both ends, or that the height of the lower end portion provided with the motor accommodating cavity (22) is set to be greater than the height of the upper end portion thereof.

12. The bicycle frame according to any claim of 6 to 11, wherein the said down tube (2) or the said seat tube (11) is further provided with a battery compartment (24); and the battery (6) is detachably disposed in the said battery compartment (24).

13. An electric bicycle that is **characterized by** comprising a pre-assembled bicycle frame with a built-in middle-motor according to claim 12, wherein the said gearbox axle (41) of the said gearbox (4) is inserted through the said built-in bottom bracket (23), the two ends thereof are connected with a left crank (8), a right crank (7) respectively, and the sprocket (5) rotates cooperating with the said gearbox (4) via the said gearbox axle (41).

## Patentansprüche

1. Vormontiertes Fahrradrahmenrohr mit fest eingebautem Mittelmotor, das als Unterrohr (2) oder Sattelrohr (11) eines Fahrradrahmens verwendet werden kann, einschließend: einen Rohrkörper (21), einen Mittelmotor (3) und ein Getriebe (4). Der Mittelmotor (3) und das Getriebe (4) sind integriert und rotieren aufeinander abgestimmt. Das Fahrradrahmenrohr ist **dadurch gekennzeichnet, dass**:
Das untere Ende des Rohrkörpers (21) mit einer fest eingebauten unteren Aufnahme (23) und einem den Motor unterbringenden Hohlraum (22), der dem äußeren Umriss des Mittelmotors (3) entspricht, versehen ist. Der Mittelmotor (3) ist in dem den Motor unterbringenden Hohlraum lösbar platziert; und der Mittelmotor (3) und das Getriebe (4) werden im Rahmenrohr festgesetzt, nachdem eine Getriebeachse (41) des Getriebes (4) durch die fest eingebaute untere Aufnahme (23) eingeführt wurde.

2. Fahrradrahmenrohr nach Anspruch 1, wobei der Rohrkörper (21) ein flaches Rohr mit mehreren Wandflächen ist; und der Mittelmotor (3) und das Getriebe (4) im Rohrkörper (21) mit einer Achsmutter (42), die mit dem anderen Ende der fest eingebauten unteren Aufnahme (23) verschraubt wird, nachdem die Getriebeachse (41) des Getriebes (4) durch die fest eingebaute untere Aufnahme (23) eingeführt wurde, festgesetzt werden.

3. Fahrradrahmenrohr nach Anspruch 1, wobei die Achse des Mittelmotors (3) zur Getriebeachse (41) des Getriebes (4) parallel angeordnet ist. Der den Motor unterbringende Hohlraum (22) ist eine Öffnung, die an einer Seite des Rohrkörpers (21) ausgeschnitten ist, die Innenwand des den Motor unterbringenden Hohlraums (22) weist mehrere Rillen auf, und die Außenwand des Mittelmotors (3) ist mit Konvexprofilen versehen, die den Innenwandrillen des den Motor unterbringenden Hohlraums (22) entsprechen.

4. Fahrradrahmenrohr nach einem beliebigen der Ansprüche 1 bis 3, wobei der Rohrkörper (21) ferner mit einem Batteriefach (24) versehen ist, und die Batterie (6) kann lösbar in dem Batteriefach (24) platziert werden.

5. Fahrradrahmenrohr nach Anspruch 4, wobei das Batteriefach (24) als konkave Einkerbung an der Oberseite des Rohrkörpers (21) ausgelegt ist. Durch die Unterstützung des Rohrkörpers (21) kann die Batterie (6) lösbar auf der Einkerbung platziert werden.

6. Vormontierter Fahrradrahmen mit fest eingebautem Mittelmotor, einschließend: ein Steuerrohr (1), ein Unterrohr (2) und ein Sattelrohr (11) nach Anspruch 1, eine untere Hinterradschwinge (9) und eine obere Hinterradschwinge (10), die miteinander verbunden sind, sowie einen Mittelmotor (3) in Kombination mit einem Getriebe (4), die in den Fahrradrahmen montiert werden sollen.

7. Fahrradrahmen nach dem Anspruch 6, wobei der Mittelmotor (3) und das Getriebe (4) in dem Unterrohr (2) oder dem Sattelrohr (11) mit einer Achsmutter (42), die mit dem anderen Ende der fest eingebauten unteren Aufnahme (23) verschraubt wird, nachdem die Getriebeachse (41) des Getriebes (4) durch die fest eingebaute untere Aufnahme (23) eingeführt wurde, festgesetzt werden.

8. Fahrradrahmen nach Anspruch 6, wobei die Achse des Mittelmotors (3) und die Getriebeachse (41) des Getriebes (4) parallel sind; wobei der den Motor unterbringende Hohlraum (22) eine Öffnung ist, die an einer Seite des Rohrkörpers (21) ausgeschnitten ist, und die Innenwand des den Motor unterbringenden Hohlraums (22) ist mit mehreren Rillen versehen, und die Außenwand des Mittelmotors (3) ist mit Konvexprofilen versehen, die mit den Innenwandrillen des den Motor unterbringenden Hohlraums (22) übereinstimmen.

9. Fahrradrahmen nach Anspruch 8, wobei das Unterrohr (2) oder das Sattelrohr (11) ein flaches Rohr mit mehreren Wandflächen ist.

10. Fahrradrahmen nach Anspruch 9, wobei die Außenbreite des Unterrohrs (2) oder des Sattelrohrs (11) weniger als die Länge der fest eingebauten unteren Aufnahme (23) beträgt oder zu dieser gleich ist; und die Breite des Mittelmotors (3) die Breite des Unterrohrs (2) oder des Sattelrohrs (11) nicht überschreitet.

11. Fahrradrahmen nach Anspruch 9, wobei das Unterrohr (2) oder das Sattelrohr (11) an beiden Enden dieselbe Höhe aufweist oder die Höhe des unteren Endabschnitts, der mit dem den Motor unterbringende Hohlraum (22) versehen ist, so festgelegt ist, dass sie größer als die Höhe des oberen Endabschnitts desselben ist.

12. Fahrradrahmen nach einem beliebigen der Ansprüche 6 bis 11, wobei das Unterrohr (2) oder das Sattelrohr (11) ferner mit einem Batteriefach (24) versehen ist; und die Batterie (6) lösbar im Batteriefach (24) angeordnet ist.

13. Elektrofahrrad, **dadurch gekennzeichnet, dass** es einen vormontierten Fahrradrahmen mit einem fest eingebauten Mittelmotor nach Anspruch 12 umfasst, wobei die Getriebeachse (41) des Getriebes (4) durch die fest eingebaute untere Aufnahme (23), deren zwei Enden jeweils mit einer linken Kurbel (8) bzw. einer rechten Kurbel (7) verbunden sind, eingeführt wird und der Zahnkranz (5) in Zusammenwirkung mit dem Getriebe (4) über die Getriebeachse (41) rotiert.

## Revendications

1. Tube de cadre de vélo préassemblé comportant un moteur central intégré qui pourrait être utilisé comme tube descendant (2) ou tube de siège (11) d'un cadre de vélo, incluant : un corps de tube (21), un moteur central (3) et une boîte de vitesses (4), ledit moteur central (3) de ladite boîte de vitesses (4) étant intégré et tournant de manière coordonnée, le tube de cadre de vélo étant **caractérisé par :**
**le fait que** l'extrémité inférieure dudit corps de tube (21) est pourvue d'un support inférieur intégré (23) et d'une cavité (22) abritant le moteur et qui correspond avec le contour extérieur dudit moteur central (3), ledit moteur central (3) étant placé de manière détachable dans ladite cavité abritant le moteur ; et ledit moteur central (3) et ladite boîte de vitesses (4) étant verrouillés dans ledit tube de cadre après l'insertion de l'axe de boîte de vitesses (41) de ladite boîte de vitesses (4) à travers le support inférieur intégré (23).

2. Tube de cadre de vélo selon la revendication 1, ledit corps de tube (21) étant un tube plat doté d'une pluralité de surfaces de paroi ; et ledit moteur central (3) et ladite boîte de vitesses (4) étant verrouillés dans ledit corps de tube (21) par un écrou d'axe (42) qui est vissé à l'autre extrémité dudit support inférieur intégré (23) une fois que l'axe de boîte de vitesses (41) de ladite boîte de vitesses (4) est inséré à travers ledit support inférieur intégré (23).

3. Tube de cadre de vélo selon la revendication 1, dans lequel l'axe dudit moteur central (3) est disposé parallèlement à l'axe de boîte de vitesses (41) de ladite boîte de vitesses (4), ladite cavité (22) abritant le moteur est une ouverture pratiquée sur une face du corps de tube (21), la paroi intérieure de ladite cavité (22) abritant le moteur comporte une pluralité de gorges, et la paroi extérieure dudit moteur central (3) est pourvue de profils convexes qui correspondent aux gorges de paroi intérieure de ladite cavité (22) abritant le moteur.

4. Tube de cadre de vélo selon l'une quelconque des revendications 1 à 3, dans lequel le corps de tube (21) est en outre pourvu d'un compartiment de batterie (24), et la batterie (6) pourrait être placée de manière détachable dans ledit compartiment de batterie (24).

5. Tube de cadre de vélo selon la revendication 4, dans lequel ledit compartiment de batterie (24) est conçu sous forme d'une encoche concave sur la face supérieure dudit corps de tube (21) avec le support dudit corps de tube (21), la batterie (6) pouvant être placée de manière détachable sur ladite encoche.

6. Cadre de vélo préassemblé comportant un moteur central intégré, comprenant : un tube de tête (1), un tube descendant (2) et un tube de siège (11) selon la revendication 1, une fourchette arrière inférieure (9) et une fourchette arrière supérieure (10) qui sont connectées ensemble, et un moteur central (3) accompagné d'une boîte de vitesses (4) à monter dans le cadre de vélo.

7. Tube de cadre de vélo selon la revendication 6, dans lequel ledit moteur central (3) et ladite boîte de vitesses (4) sont verrouillés dans ledit tube descendant (2) ou ledit tube de siège (11) par un écrou d'axe (42) qui est vissé à l'autre extrémité dudit support inférieur intégré (23) une fois que l'axe de boîte de vitesses (41) de ladite boîte de vitesses (4) est inséré à travers ledit support inférieur intégré (23).

8. Tube de cadre de vélo selon la revendication 6, dans lequel l'axe dudit moteur central (3) et l'axe de boîte de vitesses (41) de ladite boîte de vitesses (4) sont parallèles ; ladite cavité (22) abritant le moteur est une ouverture pratiquée sur une face du corps de tube (21), et la paroi intérieure de ladite cavité (22) abritant le moteur est pourvue d'une pluralité de gorges, et la paroi extérieure dudit moteur central (3) est pourvue de profils convexes qui correspondent aux gorges de paroi intérieure de ladite cavité (22) abritant le moteur.

9. Tube de cadre de vélo selon la revendication 8, dans lequel ledit tube descendant (2) ou ledit tube de siège (11) est un tube plat doté d'une pluralité de surfaces de paroi.

10. Tube de cadre de vélo selon la revendication 9, dans lequel la largeur extérieure dudit tube descendant (2) au dudit tube de siège (11) est inférieure ou égale à la longueur dudit support inférieur intégré (23) ; et la largeur dudit moteur central (3) n'excède pas la largeur dudit tube descendant (2) ou dudit tube de siège (11).

11. Tube de cadre de vélo selon la revendication 9, dans lequel ledit tube descendant (2) ou ledit tube de siège (11) a la même hauteur aux deux extrémités, ou la hauteur de la section terminale inférieure pourvue de la cavité (22) abritant le moteur est définie supérieure à la hauteur de sa section terminale supérieure.

12. Tube de cadre de vélo selon l'une quelconque des revendications 6 à 11, dans lequel ledit tube descendant (2) ou ledit tube de siège (11) est en outre pourvu d'un compartiment de batterie (24) ; et la batterie (6) est disposée de manière détachable dans ledit compartiment de batterie (24).

13. Vélo électrique qui est **caractérisé en ce qu'**il comprend un cadre de vélo préassemblé doté d'un moteur central intégré selon la revendication 12, dans lequel ledit axe de boîte de vitesses (41) de ladite boîte de vitesses (4) est inséré à travers ledit support inférieur intégré (23) dont les deux extrémités sont connectées à une manivelle gauche (8), une manivelle droite (7) respectivement, et le pignon (5) tourne en coopérant avec ladite boîte de vitesses (4) via ledit axe de boîte de vitesses (41).
